# EUROPEAN PATENT SPECIFICATION

(11) **EP 0 358 283 B1**
(45) Date of publication and mention of the grant of the patent: **28.09.1994**
(21) Application number: 89202914.1
(22) Date of filing: 30.10.1985
(51) Int. Cl.: C08F 6/08

(54) **Separating heavy metals from polymers**
Entfernung von Schwermetallen aus Polymeren
Séparation de métaux lourds de polymères

(30) Priority: 23.11.1984 US 673979; 23.11.1984 US 673978
(43) Date of publication of application: 14.03.1990
(62) Divisional of application: 85201765.6
(73) Proprietor: SHELL INTERNATIONALE RESEARCH MAATSCHAPPIJ B.V., 2596 HR Den Haag (NL)
(72) Inventor: Hoxmeier, Ronald James, Houston Texas 77082 (US)

(56) References cited:
- EP-A- 0 084 795
- FR-A- 2 152 875
- GB-A- 788 967
- US-A- 3 176 000
- CHEMICAL ABSTRACTS, vol. 87, no. 16, 17th October 1977, page 46, abstract no.118720j, Columbus, Ohio, US; & JP-A-77 69 488

## Description

The invention relates to a method for the removal of metal catalyst residues from water-insoluble polymer solutions contaminated with one or more of such residues.

The hydrogenation of unsaturated polymers is well known. Usually a solution of the polymer in an inert solvent is contacted at elevated temperature with hydrogen under pressure in the presence of a heavy metal catalyst which usually comprises at least one transition metal catalyst comprising nickel, cobalt or iron, with or without aluminium or lithium. Specific techniques may be found in British Patent Specification 1,020,720.

Unsaturated polymers are hydrogenated for a variety of reasons. The presence of olefinic double bonds in the polymers makes them susceptible to oxygen attack and to deterioration by actinic radiation; saturation of olefinic double bonds greatly improves environmental stability. Hydrogenation may improve colour. Polyethylene has been produced by hydrogenation of elastomeric polybutadiene (Ind. and Eng. Chem. 45, 1117-22 (1953), and Rubber Chem. and Tech. 35, 1052 (1962)). In certain block copolymers or homopolymers resistance to flow under stress when hot is improved by hydrogenating the aromatic rings to alicyclic rings. In other block copolymers made solely from dienes, good thermoplastic elastomers can be produced by hydrogenating all of the olefinic double bonds.

A common problem shared by all of these types of hydrogenated polymers is the deleterious effect of the small amounts of metal catalyst residues remaining after hydrogenation. The quantity of metal to be removed may be as high as 50,000 parts per million (ppm). The metal causes polymer deterioration by promoting reactions with air and actinic radiation, and must therefore be removed almost completely, e.g., to less than about 10 ppm, although higher limits may be adequate for some purposes. Filtration may be carried out first to remove much of the catalyst, but residual contamination is very difficult to remove by purely physical separation; chemical reaction and then separation are required.

After the hydrogenation reaction to saturate the double bonds in the polymer, metal catalyst residues remain and vigorous reaction, sometimes at elevated temperatures and for extended time, is required to dissolve them. Strong acids such as hydrochloric acid and sulphuric acid have been used in the past, but such mixtures are very corrosive and may have a deleterious effect on equipment used and on the hydrogenated polymer from which the metals are being removed.

U.S. Patent Specification 3,780,138 discloses a process which incorporates extraction with dilute citric acid. The method requires large volumes of extractant, relatively long extraction times and phase separation is not sharp. Currently practised catalyst removal systems use an aqueous acid extraction system with 0.3-1% H₂SO₄. The acid stream volumes are of comparable size to the polymer cement streams.

British Patent Specification No. 788,967 discloses a method of decolourizing a hydrogenated off-colour homopolymer of butadiene or a butadiene/styrene copolymer, comprising contacting said polymer with a saturated organic mono- or polycarboxylic acid containing 2 to 8 carbon atoms or with a mineral acid.

More particularly the nickel catalyst used for hydrogenation of the polymer to be decolourized thereafter, is a nickel kieselguhr catalyst.

However, in page 2, lines 113-116, there is indicated that analysis of the polymer before and after decolourization shows the same nickel content and thus the reaction is not one of removal of the metal.

European Patent Application No. 0,084,795 discloses a process for recovering alkali metal terminated resinous copolymer derived from the solution polymerization of a conjugated diene/monovinylarene copolymer, followed by coupling, where the resulting polymer cement is treated with at least one linear C₂, C₃ or C₅ to C₁₆ saturated aliphatic dicarboxylic acid. The treatment with dicarboxylic acid is conducted in order to accomplish final termination of uncoupled polymer chains as well as to recover the polymeric product. However, the removal of heavy metal catalyst residues is not taught.

In a typical polymer synthesis, lithium salts of living polymer anion chains are terminated (quenched) with alcohol in the polymerization section at the conclusion of the polymerization reaction. This polymer cement, containing lithium alkoxides, is then moved downstream to the hydrogenation section where it is contacted with H₂ and a Ni catalyst. The Ni catalyst is manufactured from Ni carboxylate salts and triethylaluminium. At the completion of the hydrogenation reaction, the polymer cement, containing catalyst, is sent to the catalyst extraction section where the Ni and Al are removed by contacting with, for example, dilute H₃PO₄ or dilute H₂SO₄. After phase separating the organic and aqueous streams, the polymer cement is forwarded to a finishing section. The aqueous stream can he sent to the effluent plant for metals recovery, for example, by precipitation, and for bio-treating to decompose entrained and dissolved organic material. The recovered metal-containing sludge is usually disposed of, for example, by trucking to a landfill.

It has now been discovered that the direct precipitation of metals from the organic polymer cement phase is possible using an oxidant and dicarboxylic acid. The approach described here combines extraction and precipitation steps using dicarboxylic acids to both extract and precipitate metals directly from polymer cements. After precipitation of the catalyst, the cement could be filtered and sent directly to finishing. There would be no aqueous phase and thus no bio-treating load from the catalyst removal unit. Likewise, the metals removal operation would be done in the catalyst removal section, not in the effluent treatment area.

The process of the present invention would have several advantages over the method used commercially at present. The acid extractant stream volume with the present invention could be about 1/10 the size of the same stream using the conventional dilute H₂SO₄. With a rapid single step extraction, most of the extraction unit facilities could be eliminated, e.g., extraction vessels and phase separators. With modest mixing requirements, it may be possible to substitute static mixers for mechanical mixers in existing facilities. Cheaper metals, e.g., 316 or 304 stainless steel could be used for the extraction vessels and phase separators in the downsized and simplified facility and would represent a substantial capital savings. However, the greatest advantage is that the method is accomplished in a single phase, thus eliminating all of the two phase procedures, for example settling and separating.

In selecting a suitable agent to remove metallic residues from the hydrogenated polymers, a complex and interrelated set of criteria should be considered as desirable: The agent chosen should be substantially inert toward the polymer and polymer solvent; it should be capable of forming a stable water-soluble complex with iron (often present as a contaminant from equipment or water); capable of forming a stable water-soluble complex with nickel or cobalt and aluminium (present as hydrogenation catalyst residues over a wide pH range); preferably when lithium initiated polymers are concerned, it should also be capable of complexing with any lithium residues which may remain after forming the original polymers. The dicarboxylic acid chosen should be substantially inert toward the polymer and polymer solvent; it should be capable of forming a compound which is insoluble in the organic solvent. It preferably reacts with iron (often present as a contaminant from equipment or water); capable of forming an insoluble compound with nickel or cobalt and aluminium (present as hydrogenation catalyst residues over a wide pH range); preferably when lithium initiated polymers are concerned, it should also be capable of reacting with any lithium residues which may remain after forming the original polymers. Agents which fail to satisfy any one of the above criteria may be regarded as unsatisfactory for the present purpose.

It is an object of this invention to provide an improved method of separating heavy metal catalyst contaminant from organic polymers. It is also an object of this invention to provide an improved method for removing metal catalyst contaminants from organic polymers by a method in which the polymer is treated with an oxidant and dicarboxylic acids.

Accordingly, the invention provides a process for the removal of metal catalyst residues selected from iron, cobalt, nickel and aluminium from water-insoluble polymer solutions contaminated with one or more of such residues, characterized in that the process comprises the steps of :-
a) treating said solutions with an oxidant and one or more dicarboxylic acids, which are soluble in the polymer cement, whereby a molar excess of dicarboxylic acid relative to the metals is used, thus forming insoluble metal precipitates, and
b) separating said precipitates from the polymer solution.

More particularly, there is provided a method of treating a nickel-contaminated water-insoluble product made by hydrogenating an unsaturated polymer of the group consisting of conjugated diene homopolymers and copolymers of conjugated dienes and vinylarenes containing a catalyst prepared from a salt or chelate of nickel reduced with an aluminium compound, said method comprising the steps of:-
a) contacting a solution of said product in an organic solvent with an oxidant and a dicarboxylic acid, thus forming an insoluble metal compound, and
b) separating the insoluble compound from the polymer, thereby removing the nickel contaminant from the product.

The process of this invention may also be applied to organic polymers that are not necessarily products from hydrogenation, but which contain iron, cobalt, nickel or aluminium contaminants. Such a polymer may be contaminated incidentally with metal, such as iron or nickel, produced by reducing a metal compound, as with an aluminium-alkyl compound.

The various components of the hydrogenation product and the agents used in the metal removal treatment will now be described:

Among the unsaturated polymers that may be hydrogenated to products suitable for treatment by the process of this invention are homopolymers made from conjugated dienes, preferably having from 4 to 8 carbon atoms per molecule, preferably 4 to 6 carbon atoms per molecule, various types (e.g., blocks or random) of copolymers of these conjugated dienes with vinylarenes, and homopolymers of vinylarenes.

The homopolymers, random copolymers and block copolymers can be made by processes well known to the art. Free radical polymerization of unsaturated hydrocarbon monomers is discussed at length in Whitby's book "Synthetic Rubber" and in hundreds of patent specifications and scientific papers. Block copolymers are the subject of many patent specifications and numerous scientific papers. References that describe polymerization techniques for block polymers are U.S. Patent Specifications 3,231,635; 3,301,840; 3,465,063; and 3,281,383. The term "vinylarene" as used herein is intended to include styrene, ring substituted styrenes and species having alkyl substituents on the vinyl group in the alpha position, such as alpha-methylstyrene.

These unsaturated polymers may be hydrogenated partially, or selectively, or completely by techniques known to the art, using finely divided metals as catalyst and hydrogen under pressure and elevated temperature. The catalyst may be, for example, nickel on kieselguhr, Raney nickel, finely divided cobalt, and the like. It will be understood that it is not important to this invention how the metal catalyst was made. With these catalysts hydrogenation may be partial or complete, in the sense that all or part of the double bonds in the unsaturated polymers are saturated.

A particularly useful type of metal catalyst is made by reducing a metal compound, such as a salt, or chelate of cobalt or nickel, with an aluminium-containing reducing agent. An example is a reaction product of nickel acetate with triethylaluminium. Nickel and cobalt salts of alkanoic acids with from 1 to 12 carbon atoms in the alkanoate moiety are particularly suitable, as are nickel chelates, such as nickel acetylacetonate. Dicobalt octacarbonyl, cobalt acetate, cobalt hydroxide and cobalt salts of alkanoic acids all produce essentially the same results. Organometallic reducing agents may be aluminium compounds, especially hydrocarbyls such as aluminiumtriethyl, aluminiumtriisobutyl, aluminiumtriphenyl and the like. Lithium aluminium hydride, aluminium hydride and aluminium powder may also be used as reducing agents.

These catalysts permit selective hydrogenation of copolymers as disclosed in detail in U.S. Patent Specification 3,595,942.

Suitable precursor polymers include linear and branched configurations having individual polymer blocks, such as polybutadiene, polyisoprene, polystyrene or polyalpha-methylstyrene.
Typical species include polystyrene-polyisoprene polystyrene-polybutadiene-polystyrene, poly(alpha-methylstyrene)-polyisoprene-poly(alpha-methylstyrene), random styrene-butadiene copolymers and vinylarene-conjugated diene block copolymers.

Typical completely hydrogenated polymers containing metal catalysts that benefit from the method of this invention are hydrogenated polybutadiene, hydrogenated polyisoprene, completely hydrogenated polystyrene, completely hydrogenated random styrene-butadiene copolymers, completely hydrogenated vinylarene-diene block copolymers, described in U.S. Patent Specifications 3,333,024 and 3,431,323, and completely hydrogenated all-diene block copolymers, described in U.S. Patent Specification 3,465,063.

Suitable hydrogenation conditions and catalysts are described in Canadian Patent Specification 815,575.

Hydrogenation may be conducted under the usual conditions known in the art, as described especially in U.S. Patent Specification 3,595,942 and British Patent Specification 1,020,720.

When hydrogenation is finished, the metal catalyst residue is insoluble in the water-immiscible inert solvent, usually a hydrocarbon, used for the hydrogenation. The hydrogenated polymer may be in solution, or it may be partially precipitated if the polymer structure is such that it partially crystallizes; for example, a hydrogenated polystyrene-polyisoprene-polystyrene is soluble in a cyclohexane hydrogenation solvent, but the hydrogenated cis 1,4-polybutadiene is a crystalline polyethylene that may be only partly soluble at room temperature. Aliphatic, cycloaliphatic and aromatic solvents may be used. Cyclohexane is a preferred solvent.

In the embodiment of this invention now to be described (steps a and b), any dicarboxylic acid soluble in the cement will work; however, preferred dicarboxylic acids are adipic acid and azelaic acid (nonanedioic acid). It is believed that effectiveness of this precipitation technique is due to the formation of an inorganic polymer with the dicarboxylic acids according to the following equation: 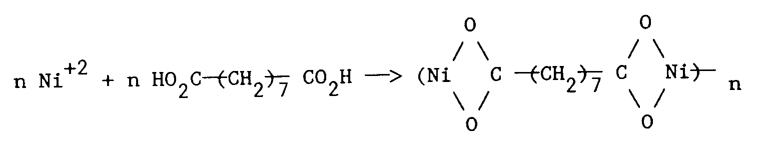
The amount of dicarboxylic acid necessary is an amount in excess of the stoichiometric amount needed to react with all of the metals present in the polymer. Accordingly, the dicarboxylic acid is suitably used in an amount in the range of from 1 to 10 mol per mol of metal. The acid may be added as a solid or a solution in a hydrocarbon solvent, e.g. toluene, or in an aliphatic monohydric alcohol containing not more than 4 carbon atoms per molecule, e.g. ethanol, or the solvent present in the polymer cement.

The exact chemical mode of action of the oxidant is not understood. The oxidant may be such typical species as oxygen, hydrogen peroxide or aryl or alkyl hydroperoxides. Amounts of oxygen required may range from 0.1 to 100 mol of oxygen per mol of metal, but a molar ratio between 0.1 and 5 is preferred. Hydrogen peroxide requirements may range from 0.1 to 100 mol per mol of metal in the hydrogenation product, with 0.1 to 5 the preferred range of the molar ratio. The quantities of alkyl hydroperoxides needed range from 0.1 to 100 mol per mol of metal, but preferably a molar ratio of 0.1 to 5 should be used.

Hydrogen peroxide may be added as a small amount of 30% hydrogen peroxide. Organic peroxides such as alkyl or aryl hydroperoxides suitable for this invention may be primary, secondary or tertiary alkyl hydroperoxides, although the tertiary alkyl hydroperoxides are preferred. Examples are ethyl hydroperoxide, butyl hydroperoxides, isopropyl hydroperoxide, tertiary butyl hydroperoxide and the like. Tertiary butyl hydroperoxide is a preferred oxidant.

The product may be contacted with oxidant before, or simultaneously with, treatment with dicarboxylic acid. If oxidant is applied before the acid, it may be bubbled through the hydrocarbon polymer product, as with air or oxygen, or it may be added as a liquid or solution, as with hydrogen peroxide or tertiary alkyl hydroperoxide, with thorough agitation.

Alcohol may be present in step (a) as an optional component in an amount of 1-20 per cent by weight of the polymer, they may be aliphatic monohydric alcohols containing preferably not more than 4 carbon atoms per molecule.

Methanol, 2-propanol and ethanol are preferred alcohols.

Treatment of the product in step (a) involves intimate mixing of the polymer and the acid and the oxidant by any of the techniques known to the chemical engineer.

Separation in step (b) to remove the metal precipitate may be done by any of several means known to the art. It may be placed in a settling tank, or it may be centrifuged or it may be run through filters, or by other means.

The process of this invention (steps a, b) may be conducted at temperatures from about 5 °C to 200 °C and at pressures from 0.1 bar to 20 bar. Preferred temperatures are from 10 °C to 200 °C and preferred pressures are from 0.5 bar to 5 bar. Contact times will range from 0.01 h to 10 h in the treating steps and from 0.01 to 14 h in the phase separation step, but preferred contact times are 0.02 h to 1 h in the treating step and 0.02 to 1 h in the phase separation step.

The following examples further illustrate the invention.

### EXAMPLES 1 AND 2

Both adipic acid and azelaic acid (nonanedioic acid) were studied as catalyst removal agents. A solution containing 15% by weight of an unhydrogenated EP-S diblock copolymer precursor with approximate block molecular weights of 65,000 and 37,000 containing 200 ppm Ni and 200 ppm Al was used as the solution to be extracted. This system was chosen so that the viscosity of the polymer solution in the settling experiment at room temperature would approximate the viscosity of typical hydrogenated cement at 70 °C. In a typical experiment, 100 ml of polymer cement was heated at 70 °C. To this solution was added a 50% excess based on the metals in solution of dicarboxylic acid. The dicarboxylic acid was pre-dissolved. Azelaic acid was added as a 10 ml solution in toluene (Example 1). Adipic acid was added as a 5 ml solution in ethanol (Example 2). The stirred solution discoloured in about 30 sec accompanied by the appearance of a green precipitate which was gravity settled overnight. By the next morning, settling was essentially complete leaving a clear, colourless supernatant cement phase. Ni analyses were performed on the cement phase by atomic absorption. With azelaic acid, Ni and Al levels in the cement after settling were 1 and 2 ppm, respectively, which corresponds to 99.5% removal of Ni. With adipic acid, Ni and Al levels in the cement after settling were 2 and 5 ppm, respectively, which corresponds to 99% removal of Ni. Both experiments were quite successful by current requirements which typically require less than 10 ppm residual Ni in the polymer cement. The flocculant green Ni dicarboxylate salts settled quite well even from a relatively viscous solution leaving a limpid, water-white supernatant cement.

## Claims

1. A process for the removal of metal catalyst residues selected from iron, cobalt, nickel and aluminium from water-insoluble polymer solutions contaminated with one or more of such residues, characterized in that the process comprises the steps of:-
a) treating said solutions with an oxidant and one or more dicarboxylic acids, which are soluble in the polymer cement, whereby a molar excess of dicarboxylic acid relative to the metals is used, thus forming insoluble metal precipitates, and
b) separating said precipitates from the polymer solution.

2. A process as claimed in claim 1, in which the polymer has been obtained by hydrogenation of a random copolymer of styrene and butadiene.

3. A process as claimed in claim 1, in which the polymer has been obtained by hydrogenation of a conjugated diene homopolymer.

4. A process as claimed in claim 1, in which the polymer has been obtained by hydrogenation of a block copolymer of a conjugated diene and a vinylarene.

5. A process as claimed in claim 4, in which the block copolymer is polystyrene-polybutadiene-polystyrene.

6. A process as claimed in any one of the preceding claims, in which nickel, cobalt and/or aluminium catalyst residues are removed, which residues originate from a hydrogenation catalyst.

7. A process as claimed in claim 6, in which the hydrogenation catalyst has been prepared by reducing a salt or chelate of nickel with an aluminium-containing reducing compound.

8. A process as claimed in any one of claims 1 to 7, in which step (b) is carried out by means of filtration or centrifugation.

9. A process as claimed in any one of the claims 1 to 8, in which the oxidant is hydrogen peroxide, oxygen, an alkyl hydroperoxide or an aryl hydroperoxide.

10. A process as claimed in claim 9, in which the oxidant is oxygen which is used in an amount in the range of from 0.1 to 100 mol of oxygen per mol of metal.

11. A process as claimed in claim 10, in which oxygen is used in an amount in the range of from 0.1 to 5 mol of oxygen per mol of metal.

12. A process as claimed in any one of claims 1-11, in which the dicarboxylic acid is used in an amount in the range of from 1 to 10 mol per mol of metal.

13. A process as claimed in any one of claims 1-12, in which the dicarboxylic acid is added as a solution in a hydrocarbon solvent or in an aliphatic monohydric alcohol containing not more than 4 carbon atoms per molecule.

14. A process as claimed in any one of claims 1-13, in which adipic acid or azelaic acid are used as the dicarboxylic acid.

## Patentansprüche

1. Ein Verfahren zur Entfernung von Metallkatalysatorrückständen, ausgewählt aus Eisen, Kobalt, Nickel und Aluminium, aus Lösungen wasserunlöslicher Polymere, welche mit einem oder mehreren solcher Rückstände verunreinigt sind, dadurch gekennzeichnet, daß das Verfahren die folgenden Schritte umfasst:
a) Behandeln der erwähnten Lösungen mit einem Oxidationsmittel und einer oder mehreren Dicarbonsäuren, die in dem Polymerzement löslich sind, wobei, relativ zu den Metallen, ein molarer Überschuß an Dicarbonsäure verwendet wird, so daß unlösliche Metallniederschläge gebildet werden, und
b) Abtrennen der erwähnten Niederschläge aus der Polymerlösung.

2. Ein Verfahren wie in Anspruch 1 beansprucht, bei welchem das Polymer durch Hydrierung eines statistischen Copolymers aus Styrol und Butadien erhalten worden ist.

3. Ein Verfahren wie in Anspruch 1 beansprucht, bei welchem das Polymer durch Hydrierung eines Homopolymers eines konjugierten Diens erhalten worden ist.

4. Ein Verfahren wie in Anspruch 1 beansprucht, bei welchem das Polymer durch Hydrierung eines Blockcopolymers aus einem konjugierten Dien und einem Vinylaren erhalten worden ist.

5. Ein Verfahren wie in Anspruch 4 beansprucht, bei welchem das Blockcopolymer Polystyrol-Polybutadien-Polystyrol ist.

6. Ein Verfahren wie in irgendeinem der vorhergehenden Ansprüche beansprucht, bei welchem Nickel-, Kobalt- und/oder Aluminiumkatalysatorrückstände entfernt werden, welche Rückstände von einem Hydrierungskatalysator stammen.

7. Ein Verfahren wie in Anspruch 6 beansprucht, bei welchem der Hydrierungskatalysator durch Reduzieren eines Salzes oder Chelates von Nickel durch eine reduzierende Verbindung, welche Aluminium enthält, hergestellt worden ist.

8. Ein Verfahren wie in irgend einem der Ansprüche 1 bis 7 beansprucht, bei welchem Schritt (b) mittels der Filtration oder Zentrifugation ausgeführt wird.

9. Ein Verfahren wie in irgendeinem der Ansprüche 1 bis 8 beansprucht, bei welchem das Oxidationsmittel Wasserstoffperoxid, Sauerstoff, ein Alkylhydroperoxid oder ein Arylhydroperoxid ist.

10. Ein Verfahren wie in Anspruch 9 beansprucht, bei welchem das Oxidationsmittel Sauerstoff ist, der in einer Menge im Bereich von 0,1 bis 100 Mol Sauerstoff pro Mol Metall verwendet wird.

11. Ein Verfahren wie in Anspruch 10 beansprucht, bei welchem Sauerstoff in einer Menge im Bereich von 0,1 bis 5 Mol Sauerstoff pro Mol Metall verwendet wird.

12. Ein Verfahren wie in irgendeinem der Ansprüche 1 bis 11 beansprucht, bei welchem die Dicarbonsäure in einer Menge im Bereich von 1 bis 10 Mol pro Mol Metall verwendet wird.

13. Ein Verfahren wie in irgendeinem der Ansprüche 1 bis 12 beansprucht, bei welchem die Dicarbonsäure als Lösung in einem Kohlenwasserstofflösungsmittel, oder in einem aliphatischen einwertigen Alkohol, welcher nicht mehr als 4 Kohlenstoffatome pro Molekül enthält, hinzugefügt wird.

14. Ein Verfahren wie in irgendeinem der Ansprüche 1 bis 13 beansprucht, bei welchem Adipinsäure oder Azelainsäure als die Dicarbonsäure verwendet werden.

## Revendications

1. Un procédé pour éliminer des résidus de catalyseurs métalliques choisis parmi le fer, le cobalt, le nickel et l'aluminium de solutions de polymères insolubles dans l'eau contaminées par un ou plusieurs de tels résidus, caractérisé en ce que le procédé comprend les étapes consistant à :
a) traiter ces solutions avec un oxydant et un ou plusieurs acides dicarboxyliques, solubles dans la dissolution de polymère, en utilisant un excès molaire d'acide dicarboxylique par rapport aux métaux, de manière à former des précipitaux de métaux insolubles, et
b) séparer ces précipités de la solution de polymère.

2. Un procédé selon la revendication 1, dans lequel le polymère a été obtenu par hydrogénation d'un copolymère statistique de styrène et de butadiène.

3. Un procédé selon la revendication 1, dans lequel le polymère a été obtenu par hydrogénation d'un homopolymère de diène conjugué.

4. Un procédé selon la revendication 1, dans lequel le polymère a été obtenu par hydrogénation d'un copolymère séquencé d'un diène conjugué et d'un vinylarène.

5. Un procédé selon la revendication 4, dans lequel le copolymère séquencé est un copolymère polystyrène-polybutadiène-polystyrène.

6. Un procédé selon l'une quelconque des revendications précédentes, dans lequel des résidus de catalyseurs au nickel, au cobalt et/ou à l'aluminium sont éliminés, ces résidus provenant d'un catalyseur d'hydrogénation.

7. Un procédé selon la revendication 6, dans lequel le catalyseur d'hydrogénation a été préparé en réduisant un sel ou un chélate de nickel avec un composé réducteur contenant de l'aluminium.

8. Un procédé selon l'une quelconque des revendications 1 à 7, dans lequel l'étape (b) est conduite au moyen d'une filtration ou d'une centrifugation.

9. Un procédé selon l'une quelconque des revendications 1 à 8, dans lequel l'oxydant est du peroxyde d'hydrogène, de l'oxygène, un hydroperoxyde d'alcoyle ou un hydroperoxyde d'aryle.

10. Un procédé selon la revendication 9, dans lequel l'oxydant est de l'oxygène qui est utilisé à raison de 0,1 à 100 moles d'oxygène par mole de métal.

11. Un procédé selon la revendication 10, dans lequel l'oxygène est utilisé à raison de 0,1 à 5 moles d'oxygène par mole de métal.

12. Un procédé selon l'une quelconque des revendications 1-11, dans lequel l'acide dicarboxylique est utilisé à raison de 1 à 10 moles par mole de métal.

13. Un procédé selon l'une quelconque des revendications 1-12, dans lequel l'acide dicarboxylique est ajouté sous la forme d'une solution dans un solvant hydrocarboné ou dans un alcool monohydrique aliphatique ne contenant pas plus de 4 atomes de carbone par molécule.

14. Un procédé selon l'une quelconque des revendications 1-13, dans lequel, comme acide dicarboxylique, on utilise l'acide adipique ou l'acide azélaïque.
